# EUROPEAN PATENT APPLICATION

(11) **EP 2 453 429 A1**
(43) Date of publication of application: **16.05.2012**
(21) Application number: 10306250.1
(22) Date of filing: 15.11.2010
(51) Int. Cl.: G09C 5/00

(54) **Method and device for 3d object protection by permutation of coordinates of its points**

(71) Applicant: Thomson Licensing, 92443 Issy-les-Moulineaux (FR)
(72) Inventor: Eluard, Marc, 35510 Cesson Sevigne (FR); Maetz, Yves, 35510 Cesson Sevigne (FR); Lelievre, Sylvain, 35510 Cesson Sevigne (FR); Doerr, Gwenael, 35510 Cesson Sevigne (FR)
(74) Representative: Ruellan-Lemonnier, Brigitte

(57) **Abstract**

A 3D object (120; 410) is protected by a first device (110) that receives (210) the 3D object (120; 410), permutes (220) the coordinates of at least one dimension of at least some of the points of the 3D object (120; 410) to obtain a protected 3D object (130; 420), and outputs (230) the protected 3D object (130; 420). The coordinates of the dimensions are preferably permuted independently of the permutations of the other dimensions. The protected 3D object (130; 420) is unprotected by a second device (140) by receiving (240) the protected 3D object (130; 420), permuting (250) the coordinates of at least one dimension of at least some the points of the protected 3D object (130; 420) to obtain an unprotected 3D object (150; 410), and outputting (260) the unprotected 3D object (150; 410). Also provided are the first device (110), the second device (140) and computer readable storage media (160, 170).

## Description

### TECHNICAL FIELD

The present invention relates generally to 3-D models and in particular to the protection of graphical objects of such models.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The use of three-dimensional (3D) objects has been increasing in the last years, particularly with the emergence of metaverses. There are multiple usages for 3D objects: socializing worlds, games, mirroring worlds, simulation tools, but also 3D User interfaces, animation movies and visual effects for television. Generally, 3D virtual objects represent real money value. In socializing worlds and games, players are selling virtual objects or avatars to other players for real money. Building an experienced character within an online game is a very lengthy process that can require hundreds of hours behind the keyboard. The 3D model of a real-world object from a simulation tool allows manufacturing the real (counterfeit) object and selling it. Leaking the 3D model for a scene of the next blockbuster from Hollywood studios may result in bad press for the studios. As can be seen, in many cases, 3D objects are assets of great value for their owner.

Strategies for content protection comprise confidentiality protection - intended to make it impossible for unauthorized users to access the content, e.g. by encryption - and watermarking - intended to make it possible to track a user who has disseminated the content without authorization to do so.

Basic methods of 3D content protection focus on the entire data, i.e. all the data is either encrypted or watermarked (or both), although these methods are somewhat crude.

More subtle ways of protecting 3D content is to protect one or more of its 3D objects. This is possible as 3D content often is made up of a number of distinct objects positioned in a setting. When each 3D object is coded as a separate entity, it becomes possible to protect each of these separately and it is not necessary to protect all of them.

For example, US 2008/0022408 describes a method of 3D object protection by storing the "bounding box" of the object as non-encrypted data in one file and the protected 3D object as encrypted data in a separate file. Any user may access the non-encrypted data, but only authorized users can access the encrypted data; non-authorized users see a basic representation thereof (i.e. the bounding box), such as a parallelepiped instead of a car. However, this method was developed to be used with 3D rendering software and is less suited for multimedia content, such as video and film. In addition, the file format (one file with non-encrypted data and one file with encrypted data) is non-standard and is thus usable only by adapted rendering devices, not standard ones. Indeed, the encrypted data does not respect the syntax of most 3D techniques and can thus normally not be used.

US 6678378 describes a solution for protecting a 3D Computer Aided Design (CAD) object by encryption. The solution may encrypt one of the coordinate values of the nodes and the equations for the edges or the contours, by nonlinear or affine transformation, thereby distorting the 3D object or by 'normal' encryption such as RSA.

Problems with this solution is that the calculations may be costly (in particular when using RSA) and that the distortions may not be sufficient to deter a malicious user from using the content nevertheless. In addition, in the case of 'normal' encryption, the 3D object may not be readable at all by a content consuming device - such as a computer or a television - which may be a drawback in some cases.

A digital rights enabled graphics processing system was proposed in 2006 by Shi, W., Lee, H., Yoo, R., and Boldyreva, A: A Digital Rights Enabled Graphics Processing System. In GH '06: Proceedings of the 21st ACM SIGGRAPH/ EUROGRAPHICS symposium on Graphics hardware, ACM, 17-26.]. With this system, the data composing the 3D object (collection of vertices, textures) is encrypted. Their decryption is handled within the Graphic Processing Unit, under control of licenses. It is proposed also to use multi resolution meshes to deliver simultaneously a protected and unprotected version of a 3D element. Although the system itself is a real progress towards secure 3D environments, the use of protected scenes with other Virtual Reality Modelling Language (VRML) renderers will lead to interoperability issues.

David Koller and Marc Levoy describe a system for protection of 3D data in which high-definition 3D data is stored in a server. The users have access to a low-definition 3D object that they can manipulate and when a user has chosen a view, a request is sent to the server that returns a two-dimensional JPEG that corresponds to the view. Hence the high-definition 3D data is protected as it is never provided to the users. (See "Protecting 3D Graphics Content" by David Koller and Marc Levoy. Communications of the ACM, June 2005, vol. 48, no. 6.) While this system works well for its intended use, it is not applicable when the full 3D data is to be transferred to a user.

A common problem with the prior art solutions is that they are not format preserving, but that they are based on the encryption of 3D data and that they provide a second set of 3D data that is usable by non-authorized devices so that the user can see something, e.g. a bounding box.

European patent application 10305692.5 describes a format preserving solution in which a 3D object comprising a list of points (i.e. vertices) is protected by permuting the coordinates of at least some of its points. The list detailing how the points are connected remains unchanged, but the 3D object no longer "makes sense" as these points no longer have the initial values. Advantages of this solution is that the protected 3D object is readable also by devices that are not able to 'decrypt' the protected 3D object - although it does look very strange - and that the protected 3D object is inscribed in a box of the same size as the original 3D object. It has however been discovered that the solution can be vulnerable to reconstruction techniques as the points of the protected 3D object have the same coordinates as the original 3D object, but in a different order.

It will therefore be appreciated that there is a need for a solution that can enable protection of 3D objects with quick calculations that still enables an unauthorized content consuming device to read and display the 3D object, albeit in a manner that renders the viewing thereof unsatisfactory, and that is resistant to reconstruction techniques. The present invention provides such a solution.

### SUMMARY OF INVENTION

In a first aspect, the invention is directed to a method of protecting a graphical object. A device receives the graphical object comprising a plurality of points represented in at least two dimensions, permutes coordinate values of at least one dimension of at least some of the points according to a determined permutation order, the coordinate values being permuted independently of coordinate values of at least one other dimension, to obtain a protected graphical object, and outputs the protected graphical object.

In a first preferred embodiment, the graphical object is a three-dimensional object.

In a second preferred embodiment, all of the coordinates of the dimension are permuted.

In a third preferred embodiment, at least some of the coordinates of all the dimensions are permuted.

It is advantageous that the coordinates are permuted using a key-based permutation algorithm.

In a second aspect, the invention is directed to a method of unprotecting a protected graphical object. A device receives the protected graphical object comprising a plurality of points represented in at least two dimensions, permutes coordinate values of at least one dimension of at least some of the points according to a determined permutation order, the coordinate values being permuted independently of coordinate values of at least one other dimension, wherein the permutation unprotects the protected object so as to obtain an unprotected graphical object, and outputs the unprotected graphical object.

In a first preferred embodiment, the graphical object is a three-dimensional object.

In a second preferred embodiment, all of the coordinates of the dimension are permuted.

In a third preferred embodiment, at least some of the coordinates of all the dimensions are permuted.

It is advantageous that the coordinates are permuted using a key-based permutation algorithm.

In a fourth preferred embodiment, outputting comprises rendering.

In a third aspect, the invention is directed to a device for protecting a graphical object. The device comprises means for receiving the graphical object comprising a plurality of points represented in at least two dimensions, means for permuting coordinate values of at least one dimension of at least some of the points according to a determined permutation order, the coordinate values being permuted independently of coordinate values of at least one other dimension, to obtain a protected graphical object, and means for outputting the protected graphical object.

In a fourth aspect, the invention is directed to a device for unprotecting a protected graphical object. The device comprises means for receiving the protected graphical object comprising a plurality of points represented in at least two dimensions, means for permuting coordinate values of at least one dimension of at least some of the points according to a determined permutation order, the coordinate values being permuted independently of coordinate values of at least one other dimension, wherein the permutation unprotects the protected object so as to obtain an unprotected graphical object, and means for outputting the unprotected graphical object.

In a fifth aspect, the invention is directed to a computable readable storage medium comprising stored instructions that when executed by a processor performs the method of any of the embodiments of the first aspect of the invention.

In a sixth aspect, the invention is directed to a computable readable storage medium comprising stored instructions that when executed by a processor performs the method of any of the embodiments of the second aspect of the invention.

### BRIEF DESCRIPTION OF DRAWINGS

Preferred features of the present invention will now be described, by way of non-limiting example, with reference to the accompanying drawings, in which
Figure 1 illustrates a system for protecting a 3D object according to a preferred embodiment of the present invention;
Figure 2 illustrates a method for protecting a 3D object according to a preferred embodiment of the present invention; and
Figures 3 and 4 illustrate different aspects of 3D object protection according to a preferred embodiment of the present invention.

### DESCRIPTION OF EMBODIMENTS

In some 3D content formats, such as for example Virtual Reality Modelling Language (VRML) and X3D, a 3D graphical object ("3D object") is represented as a first list (or array) of points, wherein each point has a set of specific coordinates, and a second list with information on how to link the points together.

A salient inventive idea of the present invention is to protect a 3D object by performing a cryptographic algorithm, preferably a key-based permutation of the coordinates of the points for at least one dimension in the first list. The permutation results in a creation of a new set of points so that the protected 3D object is still understood by any standard 3D model rendering application, but the resulting display becomes weird and hardly usable to a viewer. The skilled person will appreciate, in particular in view of the description hereinafter, the difference compared to the solution in EP 10305692.5 in which the coordinates of the points themselves are permuted as one in the list.

Authorized users have the means to reverse the permutation and shuffle the points back to their original positions.

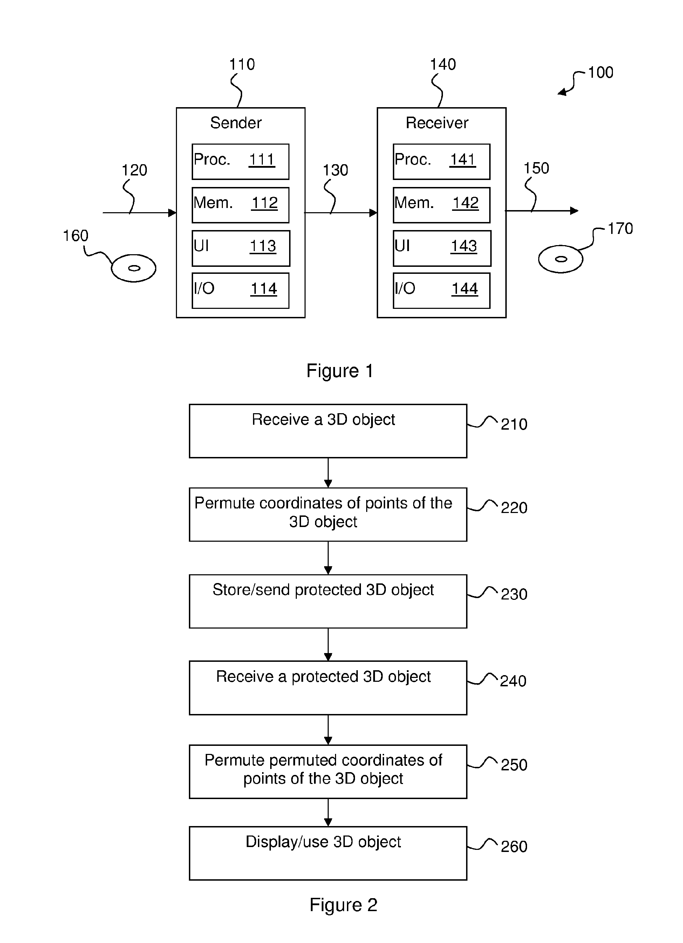

Figure 1 illustrates a system 100 for protecting a 3D object according to a preferred embodiment of the present invention and Figure 2 illustrates a method for protecting a 3D object according to a preferred embodiment of the present invention. As a non-limitative example, the points correspond to the vertices of the surfaces composing the graphical object and are expressed in 3D coordinates, and the second list comprises information on how to link the vertices together to form lines and surfaces. The permutation may be performed on the static part (Coordinate node in VRML syntax) or the animation part (Coordinateinterpolator node in VRML syntax), or preferably both. In other words, it is the representation of the 3D object that is protected, which makes the correct rendering of the object impossible.

The system 100 comprises a sender 110 and a receiver 140, each comprising at least one processor 111, 141, memory 112, 142, preferably a user interface 113, 143, and at least one input/output unit 114, 144. The sender 110 may for example be a personal computer or a workstation, while the receiver 120 for example may not only be a personal computer or a workstation, but also a television set, a video recorder, a set-top box or the like.

The sender 110 receives 210 a 3D object 120 to be protected, uses a key to permute 220 at least one of the x-coordinates, the y-coordinates, and the z-coordinates (preferably all three) of the points of the 3D object 120 to obtain a protected 3D object 130 that is stored or sent 230 to the receiver 140. As the coordinates of at least one of the dimensions (x, y, z) is permuted independently of the others, the permutation is likely to generate new points. In other words, the points are indexed and the coordinates of one dimension are 'scrambled' by changing the coordinate of the indices. (Note that the permutation of the three coordinates as one, resulting in a permutation of the points, is described in EP 10305692.5.) The receiver 120 receives 240 the protected 3D object 130, restores 250 the points by permuting the coordinates of the permuted dimensions using a key (which may be any secret number), and may then display or otherwise use 260 the unprotected 3D object 150. Put another way, the receiver reverses the permutation so that the coordinates of the indices are restored. It should be noted that the initial 3D object 120 and the unprotected 3D object 150 normally are identical.

As a result, an authorized user will not notice anything out of the ordinary since all objects will be displayed correctly, while an unauthorized user will see the overall scene with the protected object or objects rendered in an incorrect way.

A first computable readable storage medium 160 comprises stored instructions that when executed by the processor 111 of the sender 110 protects the 3D object as described. A second computable readable storage medium 170 comprises stored instructions that when executed by the processor 141 of the receiver 140 unprotects the 3D object as described.

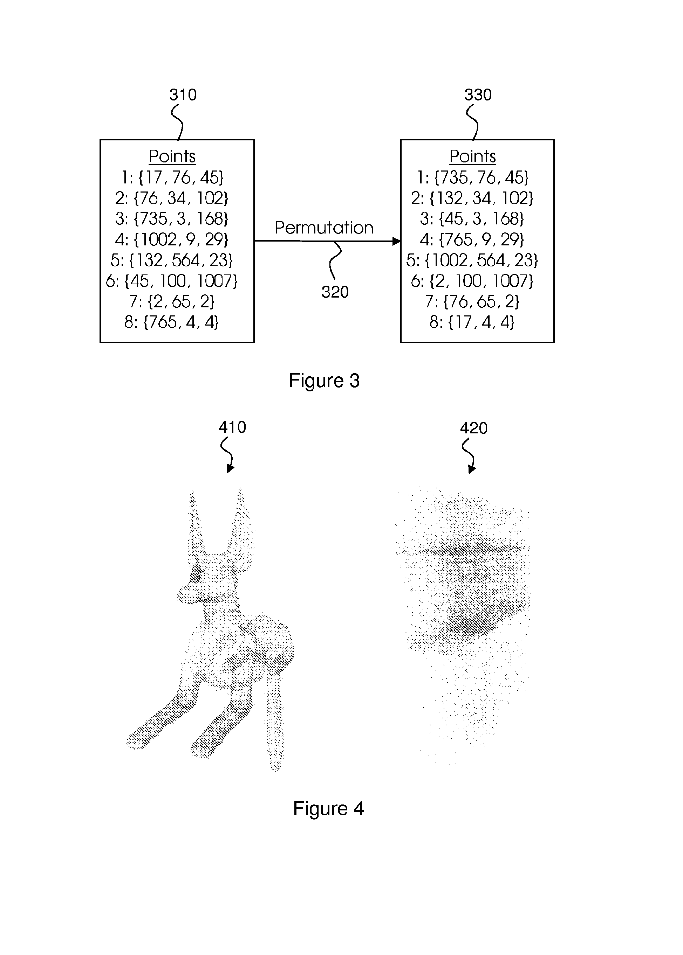

Figures 3 and 4 illustrate different aspects of 3D object protection according to a preferred embodiment of the present invention. Figure 3 shows an unprotected list of points 310 - for example the static part of the object - that after permutation 320 becomes a protected list of points 330. As an example, only the x-coordinate values have been permuted, while the y-coordinate values and the z-coordinate values remain unchanged. In Figure 3, the indices are shown to the left of the set of coordinate values. It can be seen that the points are different in the two lists; for example the x-coordinate 17 at index 1 in the unprotected list of points 310 becomes the x-coordinate at index 8 in the protected set of points 320. Figure 4 illustrates the rendering of 3D objects: a rendered unprotected 3D object 410 is shown next to a rendered protected 3D object 420 to enable comparison between them. As can be seen, the rendered protected 3D object 420 is practically completely incomprehensible, as only for example the general size of the "box" that the 3D object is inscribed in may be deduced.

In an alternative embodiment, the points of the 3D graphical object correspond to the mapping of textures on the surfaces composing the graphical object and are expressed in two-dimensional coordinates.

The permutation used may be virtually any key-based permutation algorithm that permutes the points following a determined permutation order. A basic example of such an algorithm is to a move coordinate value in the list at index *i* to the index *i'*, taking care not to overwrite the value at index *i'*. To protect the list, *i'=(i+k) mod N* with k being a secret and N the size of the list. To unprotect the list, *i'=(i-k) mod N,* once again taking care not to overwrite any values. Another example is to iteratively swap coordinate values by a function that takes the index and a key as input to produce an output index: i'=fₖ(i) mod N, where N is the number of indices. A further example of permutation algorithm has been described by Donald E. Knuth in "The Art of Computer Programming volume 2: Seminumerical algorithms", pp. 138-140.

It should be noted that one or more coordinates of a dimension may remain unpermuted without noticeably affecting the security, in particular if the ratio between the number of unpermuted points and the number of permuted coordinates remains small.

The skilled person will appreciate that user authorization and key management are out of scope of the present invention.

It may thus be seen that the coordinates are only permuted. A traditional approach would be to encrypt vertex data, which at best would result in having random points spread all over the 3D space and overlapping with the other objects of the complete scene; at worst, it would not at all be possible to render the 3D object. With the approach of the present invention, the protected 3D object stays generally within the geometrical limits of the original, i.e. unprotected, 3D object. Therefore, when the user is not authorized to unprotect one object, the overall scene is not too confused by the display of this unprotected object.

While the invention has been described for three dimensions, it may also be applied to protect objects in two dimensions or more than three dimensions.

It will thus be appreciated that the present invention can provide a mechanism for ensuring the confidentiality of 3D models, and that the mechanism can visually differentiate protected and non-protected models for non-authorized users. It will also be appreciated that the protected 3D object (and the scene comprising the 3D object) can always be rendered, although it will not be recognizable. It will also be appreciated that the protection mechanism can be resistant to (surface) reconstruction techniques.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of protecting a graphical object (120; 410), the method comprising the steps, in a device (110), of:
receiving (210) the graphical object (120; 410) comprising a plurality of points represented in at least two dimensions;
permuting (220) coordinate values of at least one first dimension of at least some of the points according to a determined permutation order, the coordinate values being permuted independently of coordinate values of at least one second dimension, to obtain a protected graphical object (130; 420); and
outputting (230) the protected graphical object (130; 420).

2. The method of claim 1, wherein the graphical object (120; 410) is a three-dimensional object.

3. The method of claim 1, wherein all the coordinates of the at least one first dimension are permuted.

4. The method of claim 1, wherein at least some of the coordinates of all the dimensions are permuted.

5. The method of any one of claims 1 to 4, wherein the coordinates are permuted using a key-based permutation algorithm.

6. A method of unprotecting a protected graphical object (130; 420), the method comprising the steps, in a device (140), of:
receiving (240) the protected graphical object (130; 420), comprising a plurality of points represented in at least two dimensions;
permuting (250) coordinate values of at least one first dimension of at least some of the points according to a determined permutation order, the coordinate values being permuted independently of coordinate values of at least one second dimension, wherein the permutation unprotects the protected object so as to obtain an unprotected graphical object (150; 410); and
outputting (260) the unprotected graphical object (150; 410).

7. The method of claim 6, wherein the unprotected graphical object (120; 410) is a three-dimensional object.

8. The method of claim 6, wherein all the coordinates of the at least one first dimension are permuted.

9. The method of claim 6, wherein at least some of the coordinates of all the dimensions are permuted.

10. The method of any one of claims 6 to 9, wherein the coordinates are permuted using a key-based permutation algorithm.

11. The method of claim 6, wherein outputting comprises rendering.

12. A device (110) for protecting a graphical object (120; 410), the device (110) comprising:
means (114) for receiving the graphical object (120; 410) comprising a plurality of points represented in at least two dimensions;
means (111) for permuting coordinate values of at least one first dimension of at least some of the points according to a determined permutation order, the coordinate values being permuted independently of coordinate values of at least one second dimension, to obtain a protected graphical object (130; 420); and
means (114) for outputting the protected graphical object (130; 420).

13. A device (140) for unprotecting a protected graphical object (130; 420), the device (140) comprising:
means (144) for receiving the protected graphical object (130; 420), comprising a plurality of points represented in at least two dimensions;
means (141) for permuting coordinate values of at least one first dimension of at least some of the points according to a determined permutation order, the coordinate values being permuted independently of coordinate values of at least one second dimension, wherein the permutation unprotects the protected object so as to obtain an unprotected graphical object (150; 410); and
means (144) for outputting the unprotected graphical object (150; 410).

14. A computable readable storage medium (160) comprising stored instructions that when executed by a processor performs the method of any one of claims 1 to 5.

15. A computable readable storage medium (170) comprising stored instructions that when executed by a processor performs the method of any one of claims 6 to 11.
